# EUROPEAN PATENT APPLICATION

(11) **EP 4 192 135 A1**
(43) Date of publication of application: **07.06.2023**
(21) Application number: 21850828.1
(22) Date of filing: 30.07.2021
(51) Int. Cl.: H04W 56/00, H04W 74/08

(54) **METHOD AND APPARATUS FOR PROCESSING UPLINK TIMING ADVANCE VALUE, AND TERMINAL**

(30) Priority: 31.07.2020 CN 202010763091
(71) Applicant: Vivo Mobile Communication Co., Ltd., Dongguan, Guangdong 523863 (CN)
(72) Inventor: WU, Yumin, Dongguan, Guangdong 523863 (CN)
(74) Representative: Lavoix
(86) International application number: PCT/CN2021/109834
(87) International publication number: WO 2022/022713

(57) **Abstract**

This application discloses an uplink timing advance (TA) value processing method, apparatus, and a terminal. The TA value processing method includes: applying a first TA value and/or a second TA value based on a preset processing mode after a random access procedure is triggered, where the first TA is configured by a network side device, the first TA is an uplink timing advance value corresponding to a first uplink resource, and the second TA value is an uplink timing advance value received in the random access procedure.

## Description

### CROSS-REFERENCE TO RELATED APPLICATIONS

This application claims priority to Chinese Patent Application No. 202010763091 .X filed in China on July 31, 2020, which is incorporated herein by reference in its entirety.

### TECHNICAL FIELD

This application relates to the field of communications technologies, and in particular, to an uplink timing advance (TA) value processing method, apparatus, and a terminal.

### BACKGROUND

When the network side releases User Equipment (User Equipment, UE) from the connected state to the IDLE/INACTIVE state, context configuration information of the UE is kept. When the UE sends small data, if a system message of the network side indicates that small data is supported in being sent (for example, small data less than 10 Kbyte is supported in being sent), the UE in the IDLE/INACTIVE state may use the dedicated uplink PUSCH resource configured by the network (for example, the pre-configured PUSCH (pre-configured PUSCH) or the preallocated uplink resource (Preallocated Uplink Resource, PUR)) to directly send the small data to the network side. When configuring the dedicated physical uplink shared channel (Physical Uplink Shared Channel, PUSCH) resource, the network may specify an uplink timing advance (Timing Advance, TA) corresponding to uplink sending of the dedicated PUSCH resource.

After the network side specifies an uplink TA value for the UE, if the UE triggers the random access procedure, the UE may obtain a new uplink TA value. However, how to deal with these two different uplink timing values, so that the network side and the UE side can have the same understanding is a problem that needs to be solved.

### SUMMARY

Embodiments of this application aim to provide an uplink timing advance (TA) value processing method, apparatus, and a terminal, to solve the problem of how to enable the network side and the UE side to have the same understanding of the TA value in a case of two different TA values.

To resolve the foregoing technical problem, this application is implemented as follows:

According to a first aspect, an uplink timing advance (TA) value processing method is provided, where the method is applied to a terminal and includes:
applying a first TA value and/or a second TA value based on a preset processing mode after a random access procedure is triggered, where the first TA is configured by a network side device, the first TA is an uplink timing advance value corresponding to a first uplink resource, and the second TA value is an uplink timing advance value received in the random access procedure.

According to a second aspect, an uplink timing advance (TA) value processing apparatus is provided, and the apparatus includes: a processing module, configured to apply a first TA value and/or a second TA value based on a preset processing mode after a random access procedure is triggered, where the first TA is configured by a network side device, the first TA is an uplink timing advance value corresponding to a first uplink resource, and the second TA value is an uplink timing advance value received in the random access procedure.

According to a third aspect, a terminal is provided, where the terminal includes a processor, a memory, and a program or an instruction stored in the memory and executable on the processor, and when the program or the instruction is executed by the processor, steps of the method according to the first aspect are implemented.

According to a fourth aspect, a readable storage medium is provided. The readable storage medium stores a program or an instruction, and when the program or the instruction is executed by a processor, steps of the method according to the first aspect are implemented.

According to a fifth aspect, a chip is provided, where the chip includes a processor and a communications interface, the communications interface is coupled to the processor, and the processor is configured to run a program or an instruction of a network side device, to implement the method according to the first aspect.

In the embodiments of this application, after the TA value that is corresponding to the dedicated uplink resource and that is specified by the network side for the UE is received, and the new TA value is obtained through the random access procedure, an appropriate TA value is selected according to the agreed rules for uplink sending, so that the network side and the UE side can have the same understanding.

### BRIEF DESCRIPTION OF DRAWINGS

FIG. 1 is a block diagram of a wireless communications system to which embodiments of this application can be applied;
FIG. 2 is a flowchart of an uplink TA value processing method according to an embodiment of this application;
FIG. 3 is a structural diagram of an uplink TA value processing apparatus according to an embodiment of this application;
FIG. 4 is a structural diagram of a communications device according to an embodiment of this application; and
FIG. 5 is a structural diagram of a terminal according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in the specification and claims of this application are used to distinguish between similar objects instead of describing a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that the technology described in the embodiments of this application is not limited to a Long Term Evolution (Long Time Evolution, LTE)/LTE-advanced (LTE-Advanced, LTE-A) system, and may also be used in various wireless communications systems, for example, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, a New Radio (New Radio, NR) system is described below as an example, and the term NR is used in most of the descriptions, but these technologies can also be used in an application other than an application of the NR system, for example, a 6th generation (6th Generation, 6G) communications system.

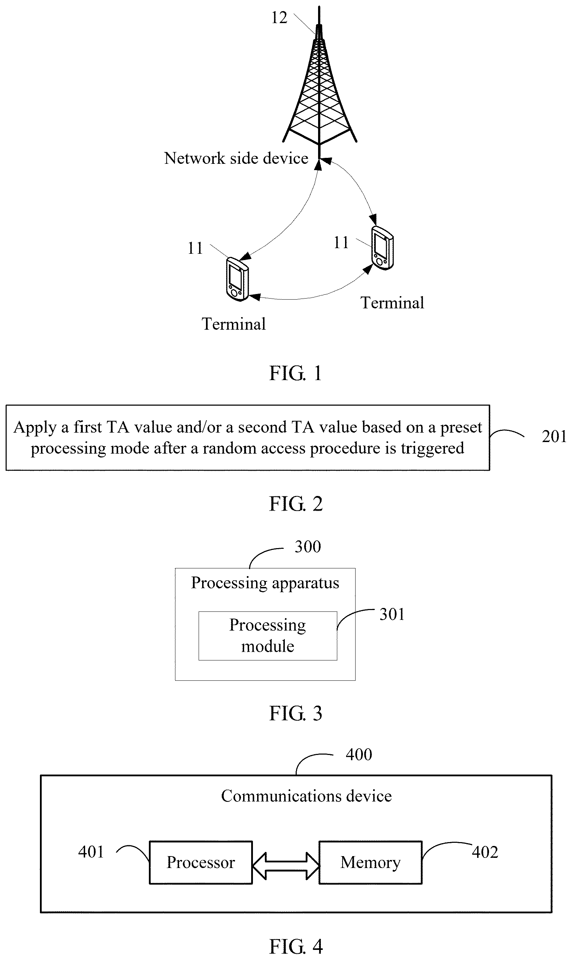

FIG. 1 is a block diagram of a wireless communications system to which embodiments of this application can be applied. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), or pedestrian user equipment (PUE). The wearable device includes a bracelet, a headset, glasses, or the like. It should be noted that a specific type of the terminal 11 is not limited in the embodiments of this application. The network side device 12 may be a base station or a core network. The base station may be referred to as a NodeB, an evolved Node B, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmitting receiving point (Transmitting Receiving Point, TRP), or another suitable term in the field provided that a same technical effect is achieved. The base station is not limited to a specific technical term. It should be noted that, in the embodiments of this application, only a base station in an NR system is used as an example, but a specific type of the base station is not limited.

With reference to the accompanying drawings, the uplink timing advance (TA) value processing method provided in the embodiments of this application is described in detail by using specific embodiments and application scenarios.

As shown in FIG. 2, FIG. 2 is a flowchart of an uplink timing advance (TA) value processing method according to an embodiment of this application, and the uplink TA value processing method according to this embodiment of this application can be applied to the terminal.

As shown in FIG. 2, the processing method may include the following steps.

Step 201: Apply a first TA value and/or a second TA value based on a preset processing mode after a random access procedure is triggered.

The first TA is configured by a network side device, the first TA is an uplink timing advance value corresponding to a first uplink resource, and the second TA value is an uplink timing advance value received in the random access procedure.

It should be noted that after receiving the downlink signal, the UE may determine a position of a downlink signal subframe. To avoid uplink interference, the network should ensure that signals sent by different UEs arrive at a fixed time, so the network side needs to configure an uplink timing advance, that is, the TA value, for uplink sending of the UE. After receiving the TA value, if the UE sends an uplink signal, the UE may send the uplink signal in advance of the downlink subframe position by a TA value.

It should be noted that the first uplink resource is configured by the network side device, the first uplink resource may be a dedicated physical uplink shared channel (PUSCH) resource (for example, a pre-configured PUSCH or PUR), and the dedicated PUSCH resource is used for directly sending small data (small data) to the network side device in a case of an idle state or an inactive state. The first TA value is configured by the network side for the UE, and the first TA value is an uplink TA value used by the first uplink resource for uplink sending. In addition, the first uplink resource and the first TA may be configured by the network side to the UE jointly or separately, which is not specifically limited in this embodiment. As an optional implementation, the network side may configure pur-Config for the UE in the RRCRelease message, and the pur-Config includes the dedicated PUSCH resource and the uplink TA value used by the PUSCH resource for uplink sending.

Optionally, when the network configures the first uplink resource, not only the uplink timing advance (namely, the first TA value) corresponding to uplink sending of the first uplink resource may be specified, but also a determining timer (for example, pur-TimeAlignmentTimer) for determining whether the uplink timing advance is available may be configured. The UE may start the timer after receiving the first TA value corresponding to the first uplink resource configured and indicated by the network, and when the timer expires, it is considered that the corresponding first uplink resource is no longer available.

In this embodiment of this application, as for obtaining the second TA value in the random access procedure, the UE only needs to obtain the TA value in an uplink out-of-synchronization state. Therefore, the UE may trigger by itself or the network side triggers the UE to initiate the random access procedure, and the network side delivers the TA value to the UE in the random access response. In addition, the network side may set a timer (for example, timeAlignmentTimer) for the TA value of the UE. The timer is started when the TA is delivered to the UE, and the network side delivers a new TA value to the UE before timeAlignmentTimer expires. The timeAlignmentTimer set by the network side is started or restarted when the TA value is received. When the timeAlignmentTimer expires, it is considered that the TA value is invalid, and the UE is in the uplink out-of-synchronization state, and cannot send the uplink signal in an uplink out-of-synchronization cell any longer.

In this embodiment of this application, after the UE triggers the random access procedure, the second TA value may be received before the random access procedure is finished successfully. For example, the TA value specified by a timing advance command (Timing Advance Command, TAC) is received in a Msg 2 of a 4-step random access procedure (or a Msg B (for example, fallbackRAR) of a 2-step random access procedure). The applying a first TA value and/or a second TA value based on a preset processing mode after a random access procedure is triggered specifically includes the following processing modes:
Mode 1: Stop using the first TA value to send an uplink signal after the random access procedure is triggered or after the random access procedure is finished.

It should be noted that the random access procedure may be triggered after receiving configuration of the first uplink resource and the first TA value.

In addition, in an optional implementation, after triggering the random access procedure, the UE considers that the uplink timing of the first uplink resource is no longer available, and stops using the first TA value to send the uplink signal. For example, if the UE triggers the 4-step random access procedure (or the 2-step random access procedure), the UE considers that the first TA value corresponding to the first uplink resource is no longer available, and stops using the first TA value to send the uplink signal.

In another optional implementation, the UE may also consider that the uplink timing of the first uplink resource is no longer available after the random access procedure is finished, and stops using the first TA value to send the uplink signal. For example, the UE receives the second TA value in the Msg 2 of the 4-step random access procedure (or the Msg B of the 2-step random access procedure), but stops using the first TA value to send the uplink signal after the random access procedure is finished. It should be noted that "after the random access procedure is finished" may be understood as that the random access procedure is finished successfully.

As an optional implementation of the embodiments of this application, the stopping using the first TA value to send an uplink signal includes at least one of the following: releasing the first uplink resource; and determining that a timer corresponding to the first uplink resource expires. In specific implementation, the releasing the first uplink resource may be UE releasing the UE-specific PUSCH uplink sending resource configured in the pur-Config configuration. The determining that a timer corresponding to the first uplink resource expires may be the UE considering that the uplink timing advance timer (for example, pur-TimeAlignmentTimer) corresponding to the dedicated PUSCH resource expires.

In this embodiment of this application, the applying a first TA value and/or a second TA value based on a preset processing mode after a random access procedure is triggered includes: using the second TA value to send an uplink signal after the random access procedure is triggered or after the random access procedure is finished.

In an implementation, after the random access procedure is triggered, the UE stops using the first TA value to send the uplink signal, and uses the second TA value to send the uplink signal after the random access procedure is triggered.

In another implementation, after the random access procedure is finished, the UE stops using the first TA value to send the uplink signal, and uses the second TA value to send the uplink signal after the random access procedure is finished. For example, the UE receives the second TA value in the Msg 2 of the 4-step random access procedure or the Msg B of the 2-step random access procedure, but still uses the first TA value to send the uplink signal in the random access procedure. After the random access procedure is finished, the UE stops using the first TA value to send the uplink signal, and uses the second TA value received in the random access procedure to send the uplink signal after the random access procedure is finished.

In another implementation, after the second TA value is received, the UE stops using the first TA value to send the uplink signal, and uses the second TA value to send the uplink signal. For example, the UE receives the second TA value in the Msg 2 of the 4-step random access procedure or the Msg B of the 2-step random access procedure. After the second TA value is received, the UE stops using the first TA value to send the uplink signal, and uses the second TA value received in the random access procedure to send the uplink signal.

Mode 2: The applying a first TA value and/or a second TA value based on a preset processing mode includes: not using the second TA value to send an uplink signal when the second TA value is received and the first TA value is still valid.

In this embodiment of this application, the not using the second TA value to send an uplink signal includes any one of the following: ignoring or discarding the second TA value; and not using the second TA value to send an uplink signal that is in the random access procedure.

In a case of ignoring or discarding the second TA value, the method further includes: using the first TA value to send an uplink signal that is in the random access procedure or after the random access procedure; or
the not using the second TA value to send an uplink signal that is in the random access procedure includes at least one of the following: using the first TA value to send an uplink signal that is in the random access procedure or after the random access procedure; and saving the second TA value, and using the second TA value to send an uplink signal that is after the random access procedure.

As an optional implementation of the embodiments of this application, when the second TA value is received and the first TA value is still valid, the second TA value is ignored or discarded, and the first TA value is used to send the uplink signal that is in the random access procedure or after the random access procedure. As an example, the UE receives the second TA value in the Msg 2 of the 4-step random access procedure, and instead of using the second TA value, the UE uses the first TA value to send the Msg 3. As another example, the UE receives the second TA value in the Msg 2 of the 4-step random access procedure, and instead of using the second TA value, the UE uses the first TA value to send hybrid automatic repeat request (Hybrid Automatic Repeat reQuest, HARQ) feedback information corresponding to the Msg 4 after the random access procedure is finished.

As an optional implementation of the embodiments of this application, when the second TA value is received and the first TA value is still valid, in the random access procedure, the UE does not use the second TA value to send the uplink signal, but the UE saves the received second TA value, and uses the second TA value to send the uplink signal after the random access procedure is finished. It should be noted that "save" can be understood as "temporary storage" or storage without using. For example, the UE receives the second TA value in the Msg 2 of the 4-step random access procedure, and the UE does not use but temporarily stores the second TA value, and after the random access procedure is finished, the UE uses the temporarily stored second TA value to send the HARQ feedback information corresponding to the Msg 4.

As an optional implementation of the embodiments of this application, if the timer corresponding to the first TA value (for example, pur-TimeAlignmentTimer) does not expire, it may be considered that the first TA value is still valid, and if the timer corresponding to the first TA value (for example, pur-TimeAlignmentTimer) expires, it may be considered that the first TA value is invalid.

Mode 3: The applying a first TA value and/or a second TA value based on a preset processing mode includes at least one of the following:
after receiving the second TA value, not using the second TA value to send an uplink signal on the first uplink resource.

The not using the second TA value to send an uplink signal on the first uplink resource includes at least one of the following:
using the first TA value to send the uplink signal on the first uplink resource; and
using the second TA value to send the uplink signal that is in the random access procedure, where
a timer corresponding to the second TA value is different from a timer corresponding to the first uplink resource.

In this embodiment of this application, the uplink TA value used in the random access procedure is different from the uplink TA value used on the first uplink resource. As an example, if the UE receives the second TA value specified by the TAC in the Msg 2 of the 4-step random access procedure (or the Msg B of the 2-step random access procedure (for example, the fallback random access response (Random Access Response, fallbackRAR))), the UE uses the second TA value specified by the TAC to send the uplink signal (for example, the Msg 3) that is in the random access procedure, but the second TA value specified by the TAC is not used to update the TA value corresponding to uplink sending of the first uplink resource (namely, the first TA value).

Optionally, in Mode 3, the uplink timer used in the random access procedure is different from the uplink timer used on the first uplink resource. For example, when the UE receives the second TA value specified by the TAC in the Msg 2 of the 4-step random access procedure (or the Msg B (for example, fallbackRAR) of the 2-step random access procedure), the UE starts timeAlignmentTimer (if the timeAlignmentTimer expires, it is considered that the second TA value specified by the TAC is unavailable), and the timeAlignmentTimer is corresponding to the second TA value and is used for sending the Msg 3. In addition, the UE keeps pur-TimeAlignmentTimer of the first uplink resource running continuously (if the pur-TimeAlignmentTimer expires, it is considered that the first TA value corresponding to the first uplink resource is unavailable), and the first TA value that is configured by the network and that is corresponding to the pur-TimeAlignmentTimer is used for uplink sending of the first uplink resource.

Mode 4: The applying a first TA value and/or a second TA value based on a preset processing mode includes: when the second TA value is received, applying the second TA value to the first uplink resource, or discarding the second TA value.

Optionally, the applying the second TA value to the first uplink resource includes: applying the second TA value to the first uplink resource after random access is finished successfully; and
the discarding the second TA value includes: discarding the second TA value after random access fails.

As an implementation of the embodiments of this application, when the second TA value specified by the TAC is received in the random access procedure, the second TA value is used for the first uplink resource after the random access is finished successfully, that is, the UE does not apply the second TA value to the first uplink resource before the random access is finished successfully. If the random access fails, the second TA value is discarded.

Optionally, the applying the second TA value to the first uplink resource includes at least one of the following:
restarting a timer corresponding to the first uplink resource; and
using the second TA value to update the first TA value, and applying the second TA value to sending an uplink signal on the first uplink resource.

Optionally, the using the second TA value to update the first TA value includes any one of the following:
using the second TA value to update the first TA value upon receiving the second TA value; and
using the second TA value to update the first TA value after the random access procedure is finished successfully.

As an example, if the UE receives the TAC in the Msg 2 of the 4-step random access procedure, the UE uses the second TA value specified by the TAC to update the first TA value corresponding to the first uplink resource.

As another example, the UE receives the TAC in the Msg 2 of the 4-step random access procedure, and after the 4-step random access procedure is finished successfully, the UE uses the second TA value specified by the TAC to update the first TA value corresponding to the first uplink resource.

Optionally, the restarting a timer corresponding to the first uplink resource includes any one of the following:
restarting the timer corresponding to the first uplink resource upon receiving the second TA value; and
restarting the timer corresponding to the first uplink resource after the random access procedure is finished successfully.

As an example, the UE starts pur-TimeAlignmentTimer when the network configures the first uplink resource, and if the UE receives the TAC in the Msg 2 of the 4-step random access procedure, the UE restarts the pur-TimeAlignmentTimer.

As another example, the UE starts pur-TimeAlignmentTimer when the network configures the first uplink resource, and after the 4-step random access procedure is finished successfully, the UE uses the second TA value received in the random access procedure and restarts the pur-TimeAlignmentTimer.

Optionally, the restarting an uplink timer corresponding to the first uplink resource includes any one of the following:
restarting the uplink timer corresponding to the first uplink resource by using a timer value that is configured when the first TA value is configured; and
restarting the timer corresponding to the first uplink resource by using a timer value that is configured in the random access procedure.

As an example, if the network side configures an uplink timing timer value (for example, pur-TimeAlignmentTimer) of the PUR resource in the RRCRelease message, the UE uses this value to restart an uplink timing timer corresponding to the first uplink resource.

As another example, if the network side configures an uplink timing timer value (for example, timeAlignmentTimer) of the random access procedure in system information, the UE uses this value to restart an uplink timing timer corresponding to the dedicated uplink resource.

According to the uplink TA value processing method provided in this embodiment of this application, after the TA value that is corresponding to the dedicated uplink resource and that is specified by the network side for the UE is received, and the new TA value is obtained through the random access procedure, an appropriate TA value is selected according to the agreed rules for uplink sending, so that the network side and the UE side can have the same understanding.

For ease of understanding, example descriptions are as follows:
Step 1: The network side configures the uplink timing value used for sending the specific uplink resource for the UE.

For example, the network side configures pur-Config for the UE in the RRCRelease message, and the configuration includes the UE-specific PUSCH uplink sending resource and the uplink timing value used for the PUSCH uplink sending.

Step 2: The UE triggers the random access procedure, and receives, before the random access procedure is finished successfully (or in the random access procedure), the uplink timing value sent by the network side (for example, the TA value specified by "Timing Advance Command" received in the Msg 2 of the 4-step random access procedure (or the Msg B (for example, fallbackRAR) of the 2-step random access procedure)), and the behavior of the UE includes any one of the following:

Method 1: After receiving, after the random access procedure is selected or after the random access procedure is finished or in the random access procedure, the uplink timing value sent by the network side, the UE considers that the uplink timing of the dedicated uplink resource is no longer available. (For example, if the UE triggers the 4-step random access procedure (or the 2-step random access procedure), the UE considers that the uplink timing of the dedicated uplink resource is no longer available.)

As for Method 1, "the random access procedure is finished" may be understood as that the random access procedure is finished successfully.

As for Method 1, the specific implementation method of that the UE "considers that the uplink timing of the dedicated uplink resource is no longer available" includes any one of the following:
the UE releases the configured dedicated uplink resource (for example, the UE releases the UE-specific PUSCH uplink sending resource configured in the pur-Config configuration); and
the UE considers that the uplink timing advance timer corresponding to the dedicated uplink resource expires (for example, pur-TimeAlignmentTimer expires).

Method 2: When the uplink timing corresponding to the dedicated uplink resource is still valid, the uplink timing value that is sent by the network side and that is received before the random access procedure is finished successfully (or in the random access procedure) is not used. (For example, if the uplink timing of the dedicated uplink resource configured by the network side to the UE is still valid, and the TA value specified by the "Timing Advance Command" received in the Msg 2 of the 4-step random access procedure (or the Msg B (for example, fallbackRAR) of the 2-step random access procedure), the UE ignores the TA value specified by the "Timing Advance Command" received in the Msg 2 of the 4-step random access procedure (or the Msg B (for example, fallbackRAR) of the 2-step random access procedure)).

As for Method 2, the behavior of the "uplink timing value that is sent by the network side and that is received before the random access procedure is finished successfully is not used" includes any one of the following:
Method 2.1: The UE ignores (or discards) the uplink timing value that is sent by the network side and that is received before the random access procedure is finished successfully.

Method 2.2: In the random access procedure, the UE does not use the uplink timing value that is sent by the network side and that is received before the random access procedure is finished successfully, but the UE temporarily stores the "uplink timing value that is sent by the network side and that is received before the random access procedure is finished successfully" (for example, storage without using).

As for Method 2.1, the behavior of the UE includes at least one of the following:
the UE applies the uplink timing value corresponding to the dedicated uplink resource to sending the uplink channel that is in the random access procedure (for example, the UE receives the TA value in the Msg 2 of the 4-step RACH, and instead of using the TA value, the UE uses the uplink timing advance corresponding to the dedicated uplink resource to send the Msg 3); and
the UE applies the uplink timing value corresponding to the dedicated uplink resource to sending the uplink channel that is after the random access procedure (for example, the UE receives the TA value in the Msg 2 of the 4-step RACH, and instead of using the TA value, after the random access procedure is finished, the UE uses the uplink timing advance corresponding to the dedicated uplink resource to send the HARQ feedback information corresponding to the Msg 4).

As for Method 2.2, the behavior of the UE includes any one of the following:
the UE applies the uplink timing value corresponding to the dedicated uplink resource to sending the uplink channel in the random access procedure (for example, the UE receives the TA value in the Msg 2 of the 4-step RACH, and instead of using the TA value, the UE uses the uplink timing advance corresponding to the dedicated uplink resource to send the Msg 3); and
the UE applies the uplink timing value corresponding to the dedicated uplink resource (or the uplink timing value that is obtained during the random access procedure and that is temporarily stored by the UE) to sending the uplink channel that is after the random access procedure. (For example, the UE receives the TA value in the Msg 2 of the 4-step RACH, and the UE does not use but temporarily stores the TA value, and after the random access procedure is finished, the UE uses the temporarily stored TA value to send the HARQ feedback information corresponding to the Msg 4.)

Method 3: The UE does not apply the uplink timing value that is sent by the network side and that is received before the random access procedure is finished successfully (or in the random access procedure) to the dedicated uplink resource. (For example, if the UE receives the TA value specified by "TAC" in the Msg 2 of the 4-step random access procedure (or the Msg B (for example, fallbackRAR) of the 2-step random access procedure), the UE still uses the TA value specified by the TAC to send the uplink signal (for example, the Msg 3) that is in the random access procedure, but the TA value specified by the "TAC" is not used to update the TA value corresponding to uplink sending of the dedicated uplink resource.)

As for Method 3, the behavior of the UE includes any one of the following:
the uplink timing value used in the random access procedure is different from the timing value used on the dedicated uplink resource; and
the uplink timing timer used in the random access procedure is different from the uplink timing timer used on the dedicated uplink resource. (For example, when the UE receives the TA value specified by the TAC in the Msg 2 of the 4-step random access procedure (or the Msg B (for example, fallbackRAR) of the 2-step random access procedure), the UE starts timeAlignmentTimer (if the timeAlignmentTimer expires, it is considered that the TA value specified by the "TAC" is unavailable), and the TA value that is specified by "TAC" and that is corresponding to the timeAlignmentTimer is used to send the Msg 3. In addition, the UE keeps pur-TimeAlignmentTimer of the dedicated uplink resource running continuously (if the pur-TimeAlignmentTimer expires, it is considered that the TA value of the UE-specific uplink resource is unavailable), and the TA value that is configured by the network and that is corresponding to the pur-TimeAlignmentTimer is used for uplink sending of the dedicated uplink resource.)

Method 4: The UE applies the uplink timing value that is sent by the network side and that is received before the random access procedure is finished successfully (or in the random access procedure) to the dedicated uplink resource.

As for Method 4, optionally, after the random access procedure is finished successfully, the UE applies the uplink timing value that is sent by the network side and that is received before the random access procedure is finished successfully (or in the random access procedure) to the dedicated uplink resource. (That is, before the random access procedure is finished successfully, the UE does not apply the uplink timing value that is sent by the network side and that is received before the random access procedure is finished successfully (or in the random access procedure) to the dedicated uplink resource.)

As for Method 4, optionally, after the random access fails, the UE discards the uplink timing value that is sent by the network side and that is received before the random access procedure is finished successfully (or in the random access procedure).

As for Method 4, the behavior of the UE of "applying the uplink timing value that is sent by the network side and that is received before the random access procedure is finished successfully (or in the random access procedure) to the dedicated uplink resource" includes at least one of the following:
the UE restarts the uplink timing timer corresponding to the dedicated uplink resource (for example, the UE starts pur-TimeAlignmentTimer when the network configures the dedicated uplink resource, and if the UE receives the TAC in the Msg 2 of the 4-step random access procedure, the UE restarts the pur-TimeAlignmentTimer.) (For example, the UE starts pur-TimeAlignmentTimer when the network configures the dedicated uplink resource, and after the 4-step random access procedure is finished successfully, the UE uses the TA value received in the random access procedure and restarts the pur-TimeAlignmentTimer); and
the UE uses the uplink timing value that is sent by the network side and that is received before the random access procedure is finished successfully (or in the random access procedure) to update the uplink timing value corresponding to the dedicated uplink resource. (For example, if the UE receives the TAC in the Msg 2 of the 4-step random access procedure, the UE uses the TA value specified by the TAC to update the uplink timing value corresponding to the dedicated uplink resource.) (For example, if the UE receives the TAC in the Msg 2 of the 4-step random access procedure, and after the 4-step random access procedure is finished successfully, the UE uses the TA value specified by the TAC to update the uplink timing value corresponding to the dedicated uplink resource.)

The "restarting an uplink timing timer corresponding to the dedicated uplink resource" includes any one of the following:
restarting the uplink timing timer corresponding to the dedicated uplink resource by using an uplink timing timer value that is configured when the dedicated uplink resource is configured. (For example, if the network side configures an uplink timing timer value (for example, pur-TimeAlignmentTimer) of the PUR resource in the RRCRelease message, the UE uses this value to restart an uplink timing timer corresponding to the dedicated uplink resource); and
restarting the uplink timing timer corresponding to the dedicated uplink resource by using an uplink timing timer value that is configured in the random access procedure. (For example, if the network side configures an uplink timing timer value (for example, timeAlignmentTimer) of the random access procedure in system information, the UE uses this value to restart an uplink timing timer corresponding to the dedicated uplink resource.)

It should be noted that, in the uplink TA value processing method provided in the embodiments of this application, an execution body may be an uplink TA value processing apparatus, or a control module in the uplink TA value processing apparatus configured to execute the uplink TA value processing method. In this embodiment of this application, the uplink TA value processing apparatus provided in the embodiments of this application is described by using an example in which the uplink TA value processing method is performed by the uplink TA value processing apparatus.

FIG. 3 is a schematic structural diagram of an uplink TA value processing apparatus according to an embodiment of this application. As shown in FIG. 3, the uplink TA value processing apparatus 300 may include: a processing module 301, configured to apply a first TA value and/or a second TA value based on a preset processing mode after a random access procedure is triggered.

The first TA is configured by a network side device, the first TA is an uplink timing advance value corresponding to a first uplink resource, and the second TA value is an uplink timing advance value received in the random access procedure.

It should be noted that the first TA value and the second TA value can be received by using the receiving module.

Optionally, that the processing module 301 applies a first TA value and/or a second TA value based on a preset processing mode after a random access procedure is triggered includes: stopping using the first TA value to send an uplink signal after the random access procedure is triggered or after the random access procedure is finished or after the second TA value is received.

Optionally, the stopping using the first TA value to send an uplink signal includes at least one of the following:
releasing the first uplink resource; and
determining that a timer corresponding to the first uplink resource expires.

Optionally, that the processing module 301 applies a first TA value and/or a second TA value based on a preset processing mode after a random access procedure is triggered includes: using the second TA value to send an uplink signal after the random access procedure is triggered or after the random access procedure is finished.

Optionally, that the processing module 301 applies a first TA value and/or a second TA value based on a preset processing mode includes: not using the second TA value to send an uplink signal when the second TA value is received and the first TA value is still valid.

Optionally, the not using the second TA value to send an uplink signal includes any one of the following: ignoring or discarding the second TA value; and not using the second TA value to send an uplink signal that is in the random access procedure.

Optionally, in a case of ignoring or discarding the second TA value, the processing module 301 is further configured to: use the first TA value to send an uplink signal that is in the random access procedure or after the random access procedure; or
the not using the second TA value to send an uplink signal that is in the random access procedure includes at least one of the following: using the first TA value to send an uplink signal that is in the random access procedure or after the random access procedure; and saving the second TA value, and using the second TA value to send an uplink signal that is after the random access procedure.

Optionally, that the processing module 301 applies a first TA value and/or a second TA value based on a preset processing mode includes at least one of the following:
after receiving the second TA value, not using the second TA value to send an uplink signal on the first uplink resource.

Optionally, the not using the second TA value to send an uplink signal on the first uplink resource includes at least one of the following:
using the first TA value to send the uplink signal on the first uplink resource; and
using the second TA value to send the uplink signal that is in the random access procedure, where
a timer corresponding to the second TA value is different from a timer corresponding to the first uplink resource.

Optionally, that the processing module 301 applies a first TA value and/or a second TA value based on a preset processing mode includes: when the second TA value is received, applying the second TA value to the first uplink resource, or discarding the second TA value.

Optionally, the applying the second TA value to the first uplink resource includes: applying the second TA value to the first uplink resource after random access is finished successfully; and
the discarding the second TA value includes: discarding the second TA value after random access fails.

Optionally, the applying the second TA value to the first uplink resource includes at least one of the following:
restarting a timer corresponding to the first uplink resource; and
using the second TA value to update the first TA value, and applying the second TA value to sending an uplink signal on the first uplink resource.

Optionally, the restarting an uplink timer corresponding to the first uplink resource includes any one of the following:
restarting the uplink timer corresponding to the first uplink resource by using a timer value that is configured when the first TA value is configured; and
restarting the timer corresponding to the first uplink resource by using a timer value that is configured in the random access procedure.

Optionally, the restarting a timer corresponding to the first uplink resource includes any one of the following:
restarting the timer corresponding to the first uplink resource upon receiving the second TA value; and
restarting the timer corresponding to the first uplink resource after the random access procedure is finished successfully.

Optionally, the using the second TA value to update the first TA value includes any one of the following:
using the second TA value to update the first TA value upon receiving the second TA value; and
using the second TA value to update the first TA value after the random access procedure is finished successfully.

Optionally, the first uplink resource is a dedicated physical uplink shared channel (PUSCH) resource configured by a network, and the dedicated PUSCH resource is used for directly sending small data to a network side device in a case of an idle state or an inactive state.

The uplink TA value processing apparatus provided in this embodiment of this application can implement each process implemented in the method embodiment of FIG. 2, and a same technical effect can be achieved. To avoid repetition, details are not described herein again.

The uplink TA value processing apparatus in this embodiment of this application may be an apparatus, or a component, an integrated circuit, or a chip in a terminal. The apparatus may be a mobile terminal, or a non-mobile terminal. For example, the mobile terminal may include, but is not limited to the type of the terminal 11 listed above. The non-mobile terminal may be a server, a network attached storage (Network Attached Storage, NAS) device, a personal computer (personal computer, PC), a television (television, TV), a teller machine, a self-service machine, or the like. This is not specifically limited in the embodiments of this application.

The uplink TA value processing apparatus in this embodiment of this application may be an apparatus with an operating system. The operating system may be an Android (Android) operating system, may be an iOS operating system, or may be another possible operating system, which is not specifically limited in the embodiments of this application.

The uplink TA value processing apparatus provided in this embodiment of this application can implement each process implemented in the method embodiment of FIG. 2, and a same technical effect can be achieved. To avoid repetition, details are not described herein again.

Optionally, as shown in FIG. 4, an embodiment of this application further provides a communications device 400, including a processor 401, a memory 402, a program or an instruction stored in the memory 402 and executable on the processor 401. For example, when the communications device 400 is a terminal, the program or the instruction is executed by the processor 401 to implement the processes of the foregoing uplink TA value processing method embodiment, and a same technical effect can be achieved.

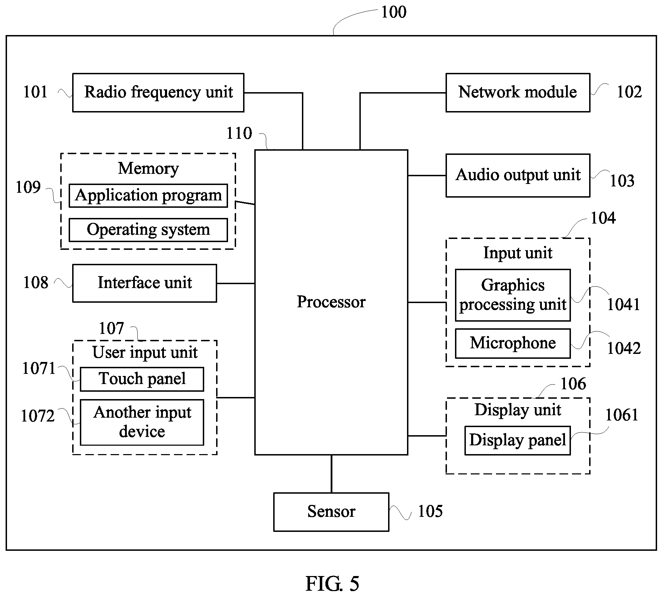

FIG. 5 is a schematic diagram of a hardware structure of a terminal according to an embodiment of this application.

The terminal 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

Persons skilled in the art can understand that the terminal 100 may further include a power supply (such as a battery) that supplies power to each component. The power supply may be logically connected to the processor 110 by using a power management system, to implement functions such as charging, discharging, and power consumption management by using the power management system. The terminal structure shown in FIG. 5 constitutes no limitation on the terminal, and the terminal may include more or fewer components than those shown in the figure, or combine some components, or have different component arrangements. Details are not described herein.

It should be understood that, in this embodiment of this application, the input unit 104 may include a graphics processing unit (Graphics Processing Unit, GPU) 1041 and a microphone 1042, and the graphics processing unit 1041 processes image data of a still picture or a video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein.

In this embodiment of this application, the radio frequency unit 101 receives downlink data from a network side device and then sends the downlink data to the processor 110 for processing; and sends uplink data to the network side device. Usually, the radio frequency unit 101 includes but is not limited to an antenna, at least one amplifier, a transceiver, a coupler, a low noise amplifier, a duplexer, and the like.

The memory 109 may be configured to store a software program or an instruction and various data. The memory 109 may mainly include a program or instruction storage area and a data storage area. The program or instruction storage area may store an operating system, and an application program or an instruction required by at least one function (for example, a sound playing function or an image playing function). In addition, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 110 may include one or more processing units. Optionally, an application processor and a modem processor may be integrated into the processor 110. The application processor mainly processes an operating system, a user interface, an application program, an instruction, or the like. The modem processor mainly processes wireless communications, for example, a baseband processor. It can be understood that, alternatively, the modem processor may not be integrated into the processor 110.

The processor 110 is configured to apply a first TA value and/or a second TA value based on a preset processing mode after a random access procedure is triggered, where the first TA is configured by a network side device, the first TA is an uplink timing advance value corresponding to a first uplink resource, and the second TA value is an uplink timing advance value received in the random access procedure.

Optionally, that the processor 110 applies a first TA value and/or a second TA value based on a preset processing mode after a random access procedure is triggered includes: stopping using the first TA value to send an uplink signal after the random access procedure is triggered or after the random access procedure is finished or after the second TA value is received.

Optionally, the stopping using the first TA value to send an uplink signal includes at least one of the following:
releasing the first uplink resource; and
determining that a timer corresponding to the first uplink resource expires.

Optionally, that the processor 110 applies a first TA value and/or a second TA value based on a preset processing mode after a random access procedure is triggered includes: using the second TA value to send an uplink signal after the random access procedure is triggered or after the random access procedure is finished.

Optionally, that the processor 110 applies a first TA value and/or a second TA value based on a preset processing mode includes: not using the second TA value to send an uplink signal when the second TA value is received and the first TA value is still valid.

Optionally, the not using the second TA value to send an uplink signal includes any one of the following: ignoring or discarding the second TA value; and not using the second TA value to send an uplink signal that is in the random access procedure.

Optionally, in a case of ignoring or discarding the second TA value, the processing module is further configured to: use the first TA value to send an uplink signal that is in the random access procedure or after the random access procedure; or
the not using the second TA value to send an uplink signal that is in the random access procedure includes at least one of the following: using the first TA value to send an uplink signal that is in the random access procedure or after the random access procedure; and saving the second TA value, and using the second TA value to send an uplink signal that is after the random access procedure.

That the processing module applies a first TA value and/or a second TA value based on a preset processing mode includes at least one of the following:
after receiving the second TA value, not using the second TA value to send an uplink signal on the first uplink resource.

Optionally, the not using the second TA value to send an uplink signal on the first uplink resource includes at least one of the following:
using the first TA value to send the uplink signal on the first uplink resource; and
using the second TA value to send the uplink signal that is in the random access procedure, where
a timer corresponding to the second TA value is different from a timer corresponding to the first uplink resource.

Optionally, that the processor applies a first TA value and/or a second TA value based on a preset processing mode includes: when the second TA value is received, applying the second TA value to the first uplink resource, or discarding the second TA value.

Optionally, the applying the second TA value to the first uplink resource includes: applying the second TA value to the first uplink resource after random access is finished successfully; and
the discarding the second TA value includes: discarding the second TA value after random access fails.

Optionally, the applying the second TA value to the first uplink resource includes at least one of the following:
restarting a timer corresponding to the first uplink resource; and
using the second TA value to update the first TA value, and applying the second TA value to sending an uplink signal on the first uplink resource.

Optionally, the restarting an uplink timer corresponding to the first uplink resource includes any one of the following:
restarting the uplink timer corresponding to the first uplink resource by using a timer value that is configured when the first TA value is configured; and
restarting the timer corresponding to the first uplink resource by using a timer value that is configured in the random access procedure.

Optionally, the restarting a timer corresponding to the first uplink resource includes any one of the following:
restarting the timer corresponding to the first uplink resource upon receiving the second TA value; and
restarting the timer corresponding to the first uplink resource after the random access procedure is finished successfully.

Optionally, the using the second TA value to update the first TA value includes any one of the following:
using the second TA value to update the first TA value upon receiving the second TA value; and
using the second TA value to update the first TA value after the random access procedure is finished successfully.

It should be noted that the terminal 100 in this embodiment can implement each process in the method embodiment of FIG. 2 in the embodiments of this application, and a same beneficial effect can be achieved. To avoid repetition, details are not described herein again.

An embodiment of this application further provides a readable storage medium, where the readable storage medium stores a program or an instruction, and when the program or the instruction is executed by a processor, the processes of the foregoing uplink TA value processing method embodiment are implemented, and a same technical effect can be achieved. To avoid repetition, details are not described herein again.

The processor is a processor in the terminal in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application also provides a chip, where the chip includes a processor and a communications interface, and the communications interface is coupled to the processor. The processor is configured to run a program or an instruction of a network side device to implement the processes of the foregoing uplink TA value processing method embodiment, and a same technical effect can be achieved. To avoid repetition, details are not described herein again.

It should be understood that the chip mentioned in this embodiment of this application may also be referred to as a system-level chip, a system chip, a chip system, an on-chip system chip, and the like.

It can be understood that the embodiments described in the present disclosure may be implemented by hardware, software, firmware, middleware, microcode, or a combination thereof. For implementation with hardware, the module, unit, submodule, subunit, and the like may be implemented in one or more application specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions of this application, or a combination thereof.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementation manners, a person skilled in the art may clearly understand that the method in the foregoing embodiment may be implemented by software in addition to a necessary universal hardware platform or by hardware only. In most circumstances, the former is a preferred implementation manner. Based on such understanding, the technical solutions of this application essentially, or the part contributing to the prior art may be implemented in a form of a software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific implementation manners. The foregoing specific implementation manners are merely schematic instead of restrictive. Under enlightenment of this application, a person of ordinary skills in the art may make many forms without departing from aims and the protection scope of claims of this application, all of which fall within the protection scope of this application.

## Claims

1. An uplink timing advance (TA) value processing method, applied to a terminal and comprising:
applying a first TA value and/or a second TA value based on a preset processing mode after a random access procedure is triggered, wherein the first TA is configured by a network side device, the first TA is an uplink timing advance value corresponding to a first uplink resource, and the second TA value is an uplink timing advance value received in the random access procedure.

2. The method according to claim 1, wherein the applying a first TA value and/or a second TA value based on a preset processing mode after a random access procedure is triggered comprises: stopping using the first TA value to send an uplink signal after the random access procedure is triggered or after the random access procedure is finished or after the second TA value is received.

3. The method according to claim 2, wherein the stopping using the first TA value to send an uplink signal comprises at least one of the following:
releasing the first uplink resource; and
determining that a timer corresponding to the first uplink resource expires.

4. The method according to claim 1 or 2, wherein the applying a first TA value and/or a second TA value based on a preset processing mode after a random access procedure is triggered comprises: using the second TA value to send an uplink signal after the random access procedure is triggered or after the random access procedure is finished or after the second TA value is received.

5. The method according to claim 1, wherein the applying a first TA value and/or a second TA value based on a preset processing mode comprises: not using the second TA value to send an uplink signal when the second TA value is received and the first TA value is still valid.

6. The method according to claim 5, wherein the not using the second TA value to send an uplink signal comprises any one of the following: ignoring or discarding the second TA value; and not using the second TA value to send an uplink signal that is in the random access procedure.

7. The method according to claim 6, wherein in a case of ignoring or discarding the second TA value, the method further comprises: using the first TA value to send an uplink signal that is in the random access procedure or after the random access procedure; or
the not using the second TA value to send an uplink signal that is in the random access procedure comprises at least one of the following: using the first TA value to send an uplink signal that is in the random access procedure or after the random access procedure; and saving the second TA value, and using the second TA value to send an uplink signal that is after the random access procedure.

8. The method according to claim 1, wherein the applying a first TA value and/or a second TA value based on a preset processing mode comprises at least one of the following:
after receiving the second TA value, not using the second TA value to send an uplink signal on the first uplink resource.

9. The method according to claim 8, wherein the not using the second TA value to send an uplink signal on the first uplink resource comprises at least one of the following:
using the first TA value to send the uplink signal on the first uplink resource; and
using the second TA value to send the uplink signal that is in the random access procedure, wherein
a timer corresponding to the second TA value is different from a timer corresponding to the first uplink resource.

10. The method according to claim 1, wherein the applying a first TA value and/or a second TA value based on a preset processing mode comprises: when the second TA value is received, applying the second TA value to the first uplink resource, or discarding the second TA value.

11. The method according to claim 10, wherein the applying the second TA value to the first uplink resource comprises: applying the second TA value to the first uplink resource after random access is finished successfully; and
the discarding the second TA value comprises: discarding the second TA value after random access fails.

12. The method according to claim 10 or 11, wherein the applying the second TA value to the first uplink resource comprises at least one of the following:
restarting a timer corresponding to the first uplink resource; and
using the second TA value to update the first TA value, and applying the second TA value to sending an uplink signal on the first uplink resource.

13. The method according to claim 12, wherein the restarting an uplink timer corresponding to the first uplink resource comprises any one of the following:
restarting the uplink timer corresponding to the first uplink resource by using a timer value that is configured when the first TA value is configured; and
restarting the timer corresponding to the first uplink resource by using a timer value that is configured in the random access procedure.

14. The method according to claim 12, wherein the restarting a timer corresponding to the first uplink resource comprises any one of the following:
restarting the timer corresponding to the first uplink resource upon receiving the second TA value; and
restarting the timer corresponding to the first uplink resource after the random access procedure is finished successfully.

15. The method according to claim 12, wherein the using the second TA value to update the first TA value comprises any one of the following:
using the second TA value to update the first TA value upon receiving the second TA value; and
using the second TA value to update the first TA value after the random access procedure is finished successfully.

16. The method according to claim 1, wherein the first uplink resource is a dedicated physical uplink shared channel (PUSCH) resource configured by a network, and the dedicated PUSCH resource is used for directly sending small data to a network side device in a case of an idle state or an inactive state.

17. An uplink timing advance (TA) value processing apparatus, comprising:
a processing module, configured to apply a first TA value and/or a second TA value based on a preset processing mode after a random access procedure is triggered, wherein the first TA is configured by a network side device, the first TA is an uplink timing advance value corresponding to a first uplink resource, and the second TA value is an uplink timing advance value received in the random access procedure.

18. The apparatus according to claim 17, wherein that the processing module applies a first TA value and/or a second TA value based on a preset processing mode after a random access procedure is triggered comprises: stopping using the first TA value to send an uplink signal after the random access procedure is triggered or after the random access procedure is finished or after the second TA value is received.

19. The apparatus according to claim 18, wherein the stopping using the first TA value to send an uplink signal comprises at least one of the following:
releasing the first uplink resource; and
determining that a timer corresponding to the first uplink resource expires.

20. The apparatus according to claim 17 or 18, wherein that the processing module applies a first TA value and/or a second TA value based on a preset processing mode after a random access procedure is triggered comprises: using the second TA value to send an uplink signal after the random access procedure is triggered or after the random access procedure is finished or after the second TA value is received.

21. The apparatus according to claim 17, wherein that the processing module applies a first TA value and/or a second TA value based on a preset processing mode comprises: not using the second TA value to send an uplink signal when the second TA value is received and the first TA value is still valid.

22. The apparatus according to claim 21, wherein the not using the second TA value to send an uplink signal comprises any one of the following: ignoring or discarding the second TA value; and not using the second TA value to send an uplink signal that is in the random access procedure.

23. The apparatus according to claim 22, wherein in a case of ignoring or discarding the second TA value, the processing module is further configured to: use the first TA value to send an uplink signal that is in the random access procedure or after the random access procedure; or
the not using the second TA value to send an uplink signal that is in the random access procedure comprises at least one of the following: using the first TA value to send an uplink signal that is in the random access procedure or after the random access procedure; and saving the second TA value, and using the second TA value to send an uplink signal that is after the random access procedure.

24. The apparatus according to claim 17, wherein that the processing module applies a first TA value and/or a second TA value based on a preset processing mode comprises at least one of the following:
after receiving the second TA value, not using the second TA value to send an uplink signal on the first uplink resource.

25. The apparatus according to claim 24, wherein the not using the second TA value to send an uplink signal on the first uplink resource comprises at least one of the following:
using the first TA value to send the uplink signal on the first uplink resource; and
using the second TA value to send the uplink signal that is in the random access procedure, wherein
a timer corresponding to the second TA value is different from a timer corresponding to the first uplink resource.

26. The apparatus according to claim 17, wherein that the processing module applies a first TA value and/or a second TA value based on a preset processing mode comprises: when the second TA value is received, applying the second TA value to the first uplink resource, or discarding the second TA value.

27. The apparatus according to claim 26, wherein the applying the second TA value to the first uplink resource comprises: applying the second TA value to the first uplink resource after random access is finished successfully; and
the discarding the second TA value comprises: discarding the second TA value after random access fails.

28. The apparatus according to claim 27, wherein the applying the second TA value to the first uplink resource comprises at least one of the following:
restarting a timer corresponding to the first uplink resource; and
using the second TA value to update the first TA value, and applying the second TA value to sending an uplink signal on the first uplink resource.

29. The apparatus according to claim 28, wherein the restarting an uplink timer corresponding to the first uplink resource comprises any one of the following:
restarting the uplink timer corresponding to the first uplink resource by using a timer value that is configured when the first TA value is configured; and
restarting the timer corresponding to the first uplink resource by using a timer value that is configured in the random access procedure.

30. The apparatus according to claim 28, wherein the restarting a timer corresponding to the first uplink resource comprises any one of the following:
restarting the timer corresponding to the first uplink resource upon receiving the second TA value; and
restarting the timer corresponding to the first uplink resource after the random access procedure is finished successfully.

31. The apparatus according to claim 28, wherein the using the second TA value to update the first TA value comprises any one of the following:
using the second TA value to update the first TA value upon receiving the second TA value; and
using the second TA value to update the first TA value after the random access procedure is finished successfully.

32. A terminal, comprising a processor, a memory, and a program or an instruction stored in the memory and executable on the processor, wherein when the program or the instruction is executed by the processor, steps of the uplink timing advance (TA) value processing method according to any one of claims 1 to 16 are implemented.

33. A readable storage medium, wherein the readable storage medium stores a program or an instruction, and when the program or the instruction is executed by a processor, steps of the uplink timing advance (TA) value processing method according to any one of claims 1 to 16 are implemented.

34. A chip, comprising a processor and a communications interface, wherein the communications interface is coupled to the processor, and the processor is configured to run a program or an instruction of a network side device to implement the uplink timing advance (TA) value processing method according to any one of claims 1 to 16.
